# EUROPEAN PATENT APPLICATION

(11) **EP 4 725 371 A1**
(43) Date of publication of application: **15.04.2026**
(21) Application number: 25186446.8
(22) Date of filing: 30.06.2025
(51) Int. Cl.: A47J 36/02, A47J 36/04

(54) **METHOD OF MANUFACTURING MICROWAVE COOKER WITH WATERPROOF FUNCTION AND HIGH PERFORMANCE HEATING ELEMENT**

(30) Priority: 14.10.2024 KR 20240139067
(71) Applicant: Pellytech Co., Ltd., Busan 46944 (KR)
(72) Inventor: KIM, Jong Hyun, 46944 Busan (KR); KIM, Min Jee, 13260 Seongnam-si (KR)
(74) Representative: Murgitroyd & Company

(57) **Abstract**

The disclosed relates to a method for manufacturing a microwave cooker with a waterproof function and a high-performance heating element, the cooker being formed by coupling a metal heating pan, a waterproof sheet, and a ceramic waterproof and water-repellent blanket insulation to an inner portion of a main body container, wherein a waterproof structure of the main body container, a pressure adjusting valve for discharging inner inflation pressure, a ceramic waterproof and water-repellent blanket insulation and a heating layer with a waterproof and water-repellent function prevent water seeping into the heating layer, and a mixing ratio of the heating layer composition is conveniently adjusted, thereby obtaining a required heating temperature.

## Description

### CROSS REFERENCE TO RELATED APPLICATION

The present application claims priority to Korean Patent Application No. 10-2024-0139067, filed October 14, 2024, the entire contents of which are incorporated herein for all purposes by this reference.

### BACKGROUND OF THE INVENTION

### Field of the Invention

The present disclosure relates to a method for manufacturing a microwave cooker that cooks food using heat converted from microwaves to heat energy when microwaves are transmitted to a heating layer that is a ceramic heating element composition.

### Description of the Related Art

The related art includes Korean Patent No. 10-0937534 "Microwave heating cooker with safety device" and Korean Patent No. 10-1885955 "Ceramic heating the cooker using microwave".

In the above techniques, internal thermal inflation pressure can be vented through bottom vent holes of a main body container. However, since the holes allow moisture to enter the inside part of the container when the container is washed with water after cooking, a hydrophilic ceramic blanket insulation immediately absorbs water and loses its insulating function. The heating layer is made of hydrophilic binder materials, such as sodium silicate or fly ash, and layers thereof loosen when the heating layer comes into contact with water, resulting in the loss of heating power.

In recent years, a wide range of microwave ovens with varying microwave power ratings (from 200W to 2400W) for faster and more convenient cooking have been released. For example, commercial microwaves with high power have been released to reduce cooking time, and domestic microwaves with lower power have been released. Also, the same high-frequency output may produce different heating temperatures depending on the manufacturer.

Since low-power microwave ovens require long cooking times and high-power microwave ovens burn food, microwave cookers have been required to have a customized heating layer that can respond to different power levels. However, a heating layer of a conventional microwave cooker is produced by mixing a binder with mill scale, steel making slag, or magnetite (Fe₃O₄) particles. With this simple and uniform heating layer manufacturing method, all the heating layers have the same heating power, and thus temperature-customized heating layers cannot be manufactured.

In addition, everyday cookware is used to cook food, and must be washed after use, and is always in contact with water. In the conventional cooker, precautions warn against washing the cooker in a dishwasher or soaking it in water. However, when water inadvertently seeps through the vent holes at the bottom, the hydrophilic ceramic blanket insulation and the heating layer can become wet, preventing the required heat when microwaves are transmitted.

Specifically, after the thermally expanded air is discharged through the vent holes during cooking, a low pressure is produced inside the main body container, and the water can be quickly absorbed into the container by the pressure difference when the product is soaked in water for washing.

### Document of Related Art

### Patent Document

(Patent document 1) Korean Patent No. 10-0937534
(Patent document 2) Korean Patent No. 10-1885955

### SUMMARY OF THE INVENTION

The present disclosure has been made keeping in mind the above problems occurring in the related art, and the present disclosure is intended to propose a method for manufacturing a microwave cooker, which is capable of increasing heating performance of the cooker using microwaves in a microwave oven: by providing a waterproof structure to a main body container and adding a waterproof and water-repellent function to a blanket insulation and a ceramic heating layer assembled in the cooker to prevent a heating layer from being wet, and dividing a process of manufacturing a base binder and a process of manufacturing a heating layer to facilitate combination and fabrication of a temperature-customized heating pan that can respond to heating temperature for each output of a microwave oven.

In order to achieve the above objective, according to the present disclosure, there is provided a primary step waterproof system including that
a waterproof structure of a valve groove part, a waterproof sheet, a pressure regulating valve, and a silicone packing is provided;
a vent hole structure formed at the bottom of a main body container is removed;
the valve groove part, the waterproof sheet, and the pressure regulating valve are provided in the main body container; and
the silicone packing of a heating pan is coupled into close contact with a silicone packing groove of the main body container to block water from seeping therein.

The waterproof and water-repellent structure for protecting the heating layer

According to the present disclosure, a final component to be protected from water contact is the heating layer 21, so there is provided a secondary step waterproof system in which the ceramic waterproof and water-repellent blanket insulation is provided, and the water-repellent function is provided to the heating layer to protect the heating layer.

Even when some water enters the main body container, the water is turned into steam and discharged through the pressure regulating valve, so there is no problem with heat loss.

The manufacturing stage of the base binder and the heating layer to manufacture a high-performance customized heating layer required

In the related art, the manufacturing steps of the heating layer are performed integrally, so all heating layers have the same heating power.

According to the present disclosure, as a convenient manufacturing process in which different composition ratios can be applied to correspond to microwave ovens of various high-frequency output powers, by separating the base binder manufacturing step and the heating layer composition manufacturing step, a composition ratio of the Fe₃O₄ powder, fly ash, and mill scale involved in heating can be customized and manufactured.

The first and second steps of the waterproof system structure of the present disclosure can solve the problem of thermal failure caused by moisture.

Furthermore, according to the present disclosure, the heating layer consisting of a composition for high heat, a composition for medium heat, and a composition for low heat can be manufactured. Therefore, a customized-heating cooker that responds to different outputs of microwave ovens can be manufactured, thereby increasing cooking satisfaction.

Furthermore, the heating layer composition, i.e., mill scale, has very little viscosity when mixed with the binder, but Fe₃O₄ powder and fly ash, which have fine particle sizes, have increased viscosity when mixed with the binder. Therefore, the mixture has better kneading properties, adhesion, and fluidity, so that molding and attachment of the heating layer can be easier.

Furthermore, the heating temperature of the cooker according to the present disclosure is increased by 20 to 30% higher than the conventional heating layer, thereby reducing cooking time and increasing cooking satisfaction.

Furthermore, heating with gas fires produces carbon dioxide, which contributes to global warming and air pollution including indoor heat-not-burn gas pollution. However, the cooker of the present disclosure cooks using heat of the ceramic heating layer that uses microwaves, not using gas fires as a heating source, so the present disclosure can provide an eco-friendly cooker.

Furthermore, according to the present disclosure, the cooker of the present disclosure cooks food with energy converted from microwaves high-heat biogenic infrared radiation, and therefore, the inherent flavors and aromas of food can be improved.

### BRIEF DESCRIPTION OF THE DRAWINGS

FIG. 1 is a flowchart showing a manufacturing stage of the present disclosure.

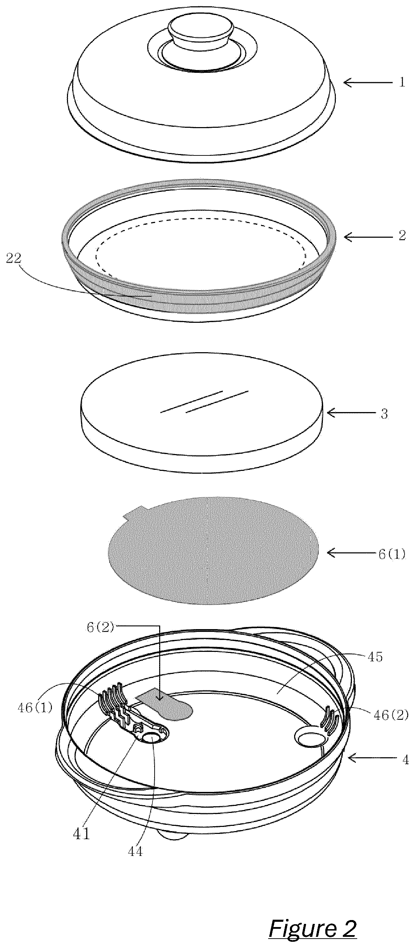

FIG. 2 is an exploded-perspective view showing a cooker manufactured according to the present disclosure.

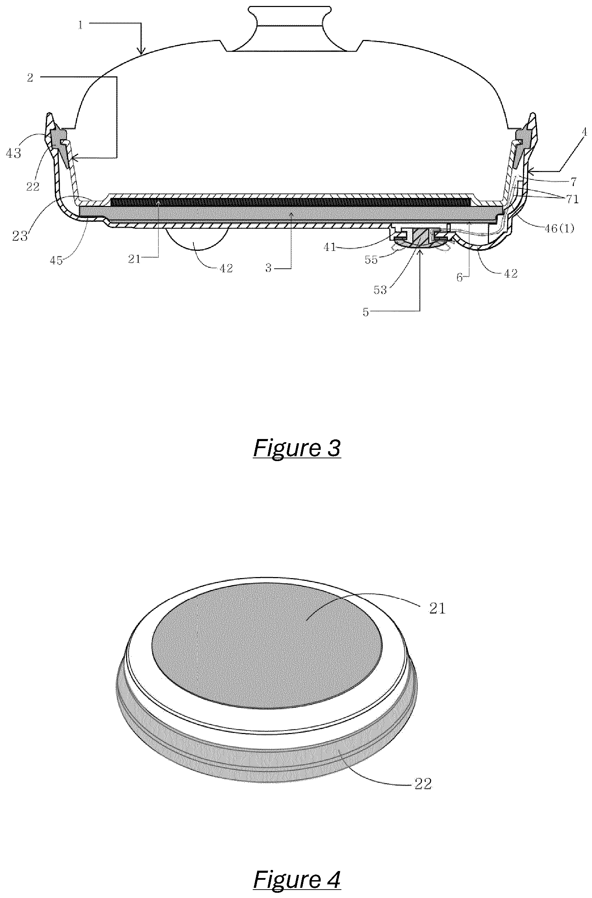

FIG. 3 is a sectional view of the cooker manufactured according to the present disclosure.
FIG. 4 is a view showing a heating layer of a heating pan according to the present disclosure.

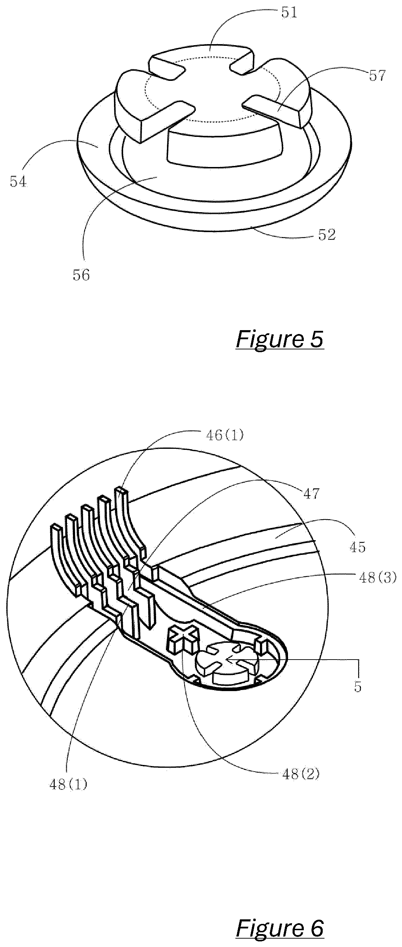

FIG. 5 is a view showing a pressure regulating valve according to the present disclosure.
FIG. 6 is an enlarged view of a valve groove part in a main body container according to the present disclosure.

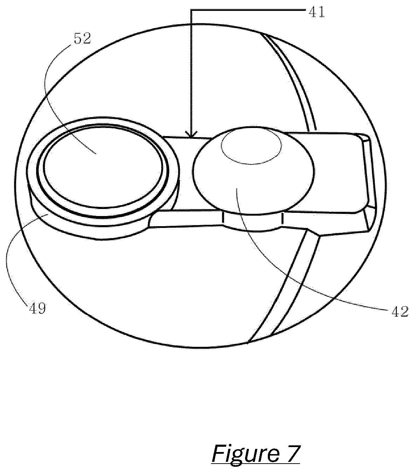

FIG. 7 is an enlarged view of the valve groove part outside the main body container according to the present disclosure.

### DETAILED DESCRIPTION OF THE DISCLOSURE

An exemplary embodiment of the present disclosure will be described in detail with reference to the accompanying drawings. In describing the embodiments of the present disclosure, it is intended to omit a detailed description of matters that are not directly related to the technical features of the present disclosure, or that are obvious to those skilled in the art to which the present disclosure belongs, and that may be redundantly applied in each embodiment.

Further, terms, as will be mentioned hereinafter, are terms defined in consideration of their function in the present disclosure, which may be varied according to the intention of a user, practice, or the like, so that the terms should be defined based on the contents of this specification.

It should also be understood that the tables and pictures presented illustrate one preferred embodiment of the present disclosure, and that changes, such as simple numerical or structural changes or substitutions of equivalent elements by others, are also within the technical scope of the present disclosure.

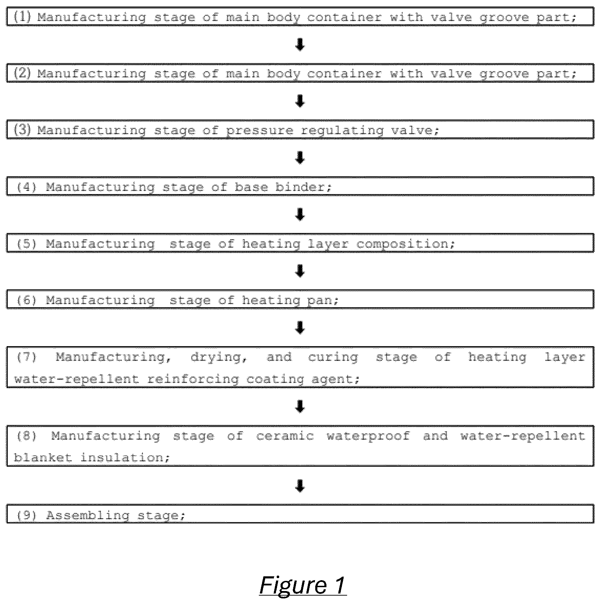

Manufacturing stages according to the present disclosure are illustrated in FIG. 1, and will be described in more detail below.

### [The manufacturing stage of the main body container with the valve groove part]

Preferably, a material of the main body container 4 is highly heat-resistant, such as thermoplastic resin, silicone rubber, and ceramic material, etc., through which microwaves are transmitted.

A valve groove part 41 has a structure, at a portion of the bottom of the main body container 4, including a hole part 44 to which a pressure regulating valve 5 is coupled, multiple exhaust ribs 46 provided at an inner part of the main body container to allow air to flow into a space between the ribs, and an exhaust port 47, and a cap guard 49 is provided at an outer part to maintain a normal assembly state of the pressure regulating valve 5.

Even when the exhaust ribs 46 come into contact with foreign objects such as insulation debris, the airflow in the space between the ribs is not blocked, and the inflation pressure can be transmitted efficiently to a depressed groove 56 of the pressure regulating valve 5.

### [The manufacturing stage of the waterproof sheet]

A waterproof sheet 6 is located between the bottom including the valve groove part 41 of the main body container 4, and a ceramic waterproof and water-repellent blanket insulation 3. The waterproof sheet 6 is made of a mica sheet as a waterproof, highly heat-resistant, and insulating material, and a material through which microwaves are transmitted.

Even when water enters through the coupling portion of the pressure regulating valve 5, the flow of water to the bottom of the ceramic waterproof and water-repellent blanket insulation is blocked.

Since a preferred shape of the waterproof sheet 6 is configured to cover the valve groove part 41 and a portion of the bottom of the main body container, but not cover and expose the exhaust port 47, an expansive air flow 71 in the closed space 7 flows through the exhaust port 47 of the valve groove part 41 by the pressure regulating valve 5.

Another preferred shape of the waterproof sheet 6 is configured to be seated on a holder 48 of the main body container, covering only the valve groove part 41, but the exhaust port 47 is not covered and opened.

The present disclosure may use one suitable shape from the above shapes, depending on the characteristics of the finished product.

### [The manufacturing stage of the pressure regulating valve]

The pressure regulating valve 5 of the present disclosure is a structure that allows thermal inflation pressure, which is formed in a closed space when microwaves are transmitted and a heating layer 21 heats at a high temperature, to be discharged to the outside space.

Specifically, when moisture enters the container, the moisture is converted into steam, increasing internal pressure, and a risk of an explosion of the main body container occurs when the internal pressure exceeds a certain threshold. Therefore, excess pressure should be vented to prevent unexpected accidents.

The preferred pressure regulating valve 5 of the present disclosure is made of a silicone rubber material, and includes a support 51 at an upper end, a support post part 53 at a middle portion, and a cap part 52 at a lower end, and includes one or more exhaust passages 57 connected to the support and the support post part.

The thermal inflation pressure is transmitted to the depressed groove 56 of the cap part 52 through the exhaust passage 57. When the internal pressure exceeds a certain threshold, the elasticity of the silicone rubber automatically allows the rim part 54 to bend downward, creating an opening 55 through which the pressure is discharged to the outside space.

The pressure regulating valve 5 has a small footprint and is easily replaced from and coupled to the main body container without disassembling the assembled main body container.

Another preferred example of the pressure regulating valve 5 of the present disclosure is a valve structure opened and closed by the spring elasticity. A member, which is automatically opened and closed according to the strength of the internal pressure, is inserted into a valve through hole and is raised and lowered, and the pressure regulating valve 5 includes a coupling member for coupling the pressure regulating valve to the main body container to discharge the pressure automatically.

### [The manufacturing stage of the base binder]

The manufacturing state of the base binder is a precursor stage for manufacturing the heating layer composition, and is separated from the manufacturing stage of the heating layer composition.

The main components of the base binder, sodium silicate, Fe₃O₄ powder, and fly ash, are hydrophilic. However, when the components are combined with the inorganic water-repellent agent added in the present disclosure and then dried and cured, the water-repellent performance can be maintained even at high temperatures of 400 to 500°C.

The preferred base binder composition of the present disclosure is formed by stirring while including 30 to 50 parts by weight of sodium silicate, 1.5 to 2 parts by weight of concentrated 99% acetic acid, 20 to 220 parts by weight of Fe₃O₄ powder, 10 to 70 parts by weight of fly ash, and 5 to 10 parts by weight of inorganic water-repellent agent, based on 100 parts by weight of water.

The above sodium silicate can be optionally used according to the required contents of SiO₂ and Na₂O among the type 1, type 2, type 3, type 4 of the Korean Industrial Standard (KSM1415), and sodium silicate used in the embodiment of the present disclosure is the type 2, and SiO₂ is 34 to 36 parts by weight and Na₂O is 14 to 15 parts by weight.

The water resistance can be improved by using sodium silicate with potassium oxide (K₂O) or lithium oxide (Li₂O).

Acetic acid is added to the sodium silicate to generate crystalline silicates by stirring, thereby reducing the loosening of the heating layer in water. A certain content of acid solution, such as conc-HCl, etc., may be substituted for the acetic acid, and different types, amounts, concentrations, and temperatures of acids will produce different silicates, so the appropriate addition type and ratio is selected depending on the type of composition required.

Furthermore, the preferred Fe304 powder of the present disclosure has a particle size from 200 mesh or less to nanoparticles, and is a purity of 98% or higher.

The Fe₃O₄ powder is a ferromagnetic ceramic, and when the Fe₃O₄ powder is mixed with mill scale and fly ash and dry and cured, the mixture increases the microwave absorption capacity of the heating layer to increase the heating temperature and increases the viscous binding force to increase the impact strength.

Furthermore, the fly ash of the present disclosure is a by-product of burning coal, and particles thereof have a spherical shape and therefore act as ball bearings to reduce frictional resistance during molding, and improves the durability and strength of the heating element by the pozzolanic reaction, and increases the moldability to increase the productivity.

In addition, as the above fly ash content increases, the viscosity enhances and the moldability improves, but the heating temperature gradually decreases, so a desirable mixing ratio may be applied.

Meanwhile, silica sand may be mixed instead of the fly ash.

Furthermore, a preferred composition of inorganic water-repellent agent of the present disclosure is achieved by stirring while including 5 to 7 parts by weight of colloidal nano silica hydrophobic silicon dioxide powder or nano aerogel powder, based on 100 parts by weight of a mixed solution of 10 to 90 parts by weight of N-octyltriethoxy silane and 10 to 90 parts by weight of tetraethoxy silane.

Furthermore, a stirring method of the base binder of the present disclosure is as follows.
- Pour a required amount of water into a stirrer.
- Add a required amount of sodium silicate to the water and stir for 30 minutes to 1 hour.
- To the above solution, add a required amount of acetic acid gradually while stirring for 30 minutes to 1 hour to generate and dissolve silicicates.
- To the above solution, add a required amount of Fe₃O₄ powder and fly ash and stir for 1 hour.
- To the above solution, add a required amount of inorganic water-repellent agent and stir for 1 hour.

All stirring speeds in the above process should be about 200 rpm to ensure uniform dissolution.

### [The manufacturing stage of the heating layer composition]

The manufacturing stage of the heating layer composition of the present disclosure is performed by adding and mixing a required amount of mill scale to the base binder. The mill scale is a ferromagnetic ceramic that absorbs microwaves when the microwaves are transmitted, and converts the microwaves into heat energy, generating high heat in a short time. The mill scale is produced during heat treatment of metal and is an oxide layer film containing Fe₂O₃, SiO₂, Al₂O₃, FeO, etc.

The preferred heating layer composition of the present disclosure is produced by including,
based on total parts by weight of the base binder,
350 to 700 parts by weight of mill scale, and mixing it.

As the heating element used in the present disclosure, the mill scale, which is crushed and screened to pass through a 3 mm mesh after removing foreign objects by a film, is used, and the mill scale having 80 to 95% of the contents of Fe₂O₃ and FeO and a high microwave absorption rate is used.

When the heating layer composition is attached as the heating layer of the heating pan, dried, and cured, the heating layer becomes porous.

The porous layer can resist thermal expansion and contraction, so the adhesion of the layer to the fan remains even at high temperatures, improving the durability and heat resistance of the heating layer.

Therefore, a required heating temperature of the heating layer may be obtained by combining a content ratio of the mill scale in the base binder composition of the present disclosure.

### [The manufacturing stage of the heating pan]

The heating pan of the present disclosure is made of a metallic material and made by molding and attaching the heating layer composition to the bottom thereof in a required shape, thickness, and required weight, and being completely dried and cured at 250 - 350°C for 25 - 30 minutes.

Furthermore, the thickness, weight, and surface shape of the heating layer attached to the heating pan may affect the heating temperature.

Therefore, the heating temperature can be controlled by providing the surface of flat, concave, convex, and other shapes.

In other words, a convex heating layer attached to a metal pan can absorb 10 to 20 percent more microwaves than a flat or concave heating layer, generating higher temperatures.

Furthermore, coupling a silicone packing 22 to an edge of the heating pan 2 is to forcibly block a coupling gap between a silicone packing groove 43 of the main body container and the silicone packing 22 with a silicone rubber packing with elasticity, thereby ensuring the waterproof function of the main body container.

### [The manufacturing, drying, and curing stage of the heating layer water-repellent reinforcing coating agent]

For the water-repellent function of the heating layer of the present disclosure, the above stage includes,
a manufacturing stage of the heating layer for imparting a basic water-repellent function by an inorganic binder included in the base binder, and
a stage of surface-treating the heating layer by spraying a water-repellent reinforcing coating agent, and drying and curing the surface to improve the water-repellent performance. Therefore, the above basic process or the water-repellent enhancement process may be applied to the manufacturing process as required.

The inorganic water-repellent agent is dried and cured after the inorganic water-repellent agent with a small molecular size is penetrated into capillary pores of the heating layer of the porous layer, thus increasing the water-repellency of the heating layer.

An added component of the heating layer water-repellent reinforcing coating agent should not contain organic compounds, as heat resistance at a high temperature of 400 to 500°C is required.

A composition of the water-repellent reinforcing coating agent of the present disclosure is obtained by including 5 to 7 parts by weight of colloidal nano silica hydrophobic silicon dioxide powder or nano aerogel powder and 3 to 10 parts by weight of nano carbon powder, based on 100 parts by weight of a mixed solution of 10 to 90 % by weight of N-octyltriethoxy silane and 10 to 90 % by weight of tetraethoxy silane, and stirring it for dissolution.

The water-repellent reinforcing coating agent is sprayed on the heating layer surface and then the surface is dried and cured in a tunnel type drying furnace at 250 to 350°C for 25 to 30 minutes, imparting good heat-resistant and permeable water-repellent properties. Therefore, a water-repellent phenomenon occurs when water that comes into contact with the surface of the heating layer is beaded and rolls off.

Nano carbon powder is a main ingredient added to the water-repellent coating agent of the present disclosure to enhance adhesion to the heating layer and increase surface hardness to improve durability and heat resistance.

### [Manufacturing stage of the ceramic waterproof and water-repellent blanket insulation]

According to the present disclosure, the preferred waterproof and water-repellent blanket insulation covers a lower portion of the heating pan 2 to block high heat of the heating layer 21 from conducting to the lower portion or a side surface. The blanket layer is a porous inorganic ceramic fiber layer, and a compressed blanket layer manufactured by a spinning process without an organic binder, and is elastic.

According to the present disclosure, the preferred ceramic waterproof and water-repellent blanket insulation consists of a porous ceramic fiber blanket layer including two or more components of Al₂O₃, SiO₂, CaO, MgO, ZrO₂, a silicate group, and an alkoxysilane group, and is a blanket layer surface-treated with a hydrophobic silica material or containing a hydrophobic silica material in fiber layers, and the blanket layer maintains high thermal insulation and water-repellent properties.

Another preferred insulation of the present disclosure may be a water-repellent blanket consisting of hydrophobic aerogel blanket.

The ceramic waterproof and water-repellent blanket insulation should be a high-temperature heat resistant of 500°C or higher, insulating, and microwave transmissive material.

### [The assembling stage]

The assembling stage for the complete product of the present disclosure is performed by,
coupling the pressure regulating valve 5 to the valve groove part 41 of the main body container 4, and placing the waterproof sheet 6 thereon, and then attaching the ceramic waterproof and water-repellent blanket insulation 3 and the heating layer 21 thereon, and placing the heating pan 2 to which the silicone packing 22 is coupled thereon, and then pressing the heating pan 2 downward so that the silicone packing 22 is brought into close contact with the silicone packing groove 43 of the main body container.

And reference numeral 1 is a lid.

The main body container 4 is made of a material such as silicone rubber, thermoplastics, ceramics, etc., with heat resistance.

In general, when the temperature of a body of plastic resin or silicone rubber is increased, thermal inflation of about 3/1000 to 30/1000 occurs, increasing the average distance between constituent particles and thus increasing the volume.

As a process of assembling the silicone packing 22 into close contact with a packing groove 43, according to the present disclosure, by using the thermal inflation of a material due to heating, an inner diameter of the silicone packing groove 43 of the main body container is provided equal to or less than an outer diameter of the silicone packing 22 coupled to the heating pan 2 at the room temperature, and then the main body container 4 is heated at ambient temperature of 100 - 150°C for 5 to 10 min to increase the volume. Therefore, the silicone packing 22 coupled to the heating pan 2 is inserted into the packing groove 43 with the expanded volume of the main body container 4 without breakage, and then the volume is recovered when the temperature of the main body container 4 is lowered to the room temperature, and a perimeter of the silicone packing 22 having elasticity is compressed to be coupled in close contact with each other, thereby achieving the waterproof structure without water seeping.

Furthermore, the preferred bottom shape of the main body container 4 and the heating pan 2 of the present disclosure includes a container protruding end 45 on an outer portion of the bottom of the main body container.

Furthermore, a pan protruding end 23 is preferably formed on an outer portion of the bottom of the heating pan.

As one or more protruding structures among the above structures, when the heating pan 2 is pressed downward to the main body container 4, an outer portion of the ceramic waterproof and water-repellent blanket insulation 3 is compressed more than an inner portion, thereby reducing pores of the outer portion of the ceramic blanket insulation so that it is difficult for moisture to be transferred to the heating layer, thereby improving the waterproof effect.

### (Experimental example 1)

### Waterproof test of the present disclosure

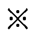 Inspection agency: Korea Testing Certification Institute (KTC)

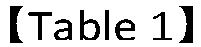

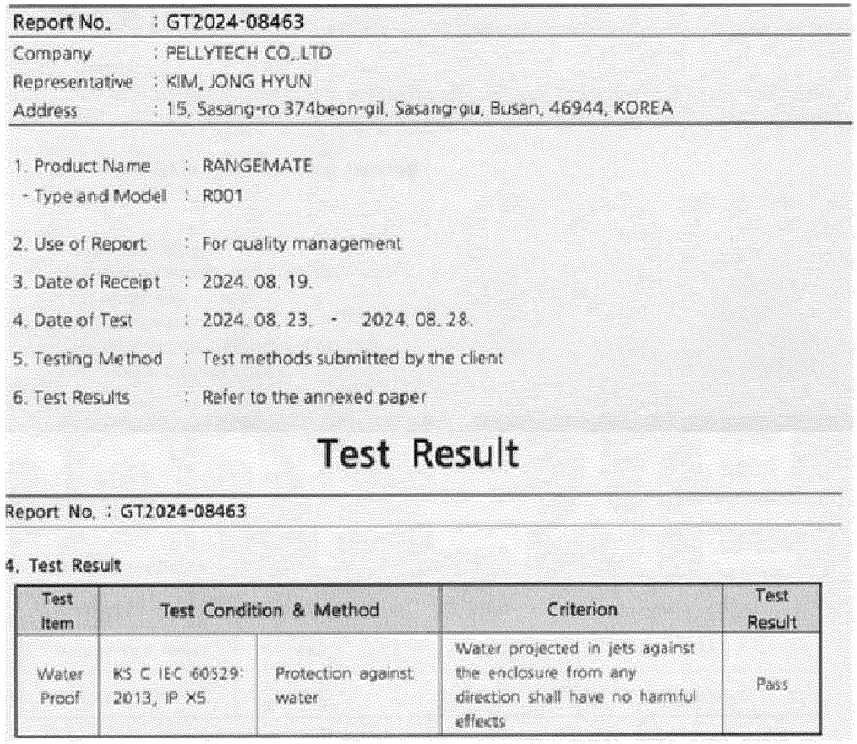

### [Result]

As shown in the above data, according to the present disclosure, the waterproof function was confirmed with the structure including the valve groove part 41 of the main body container, the waterproof sheet 6, the silicone packing 22 of the heating pan, and the pressure regulating valve 5.

### (Experimental example 2)

### Test comparing the water-repellency of the heating layer of the related art and the heating layer of the present disclosure

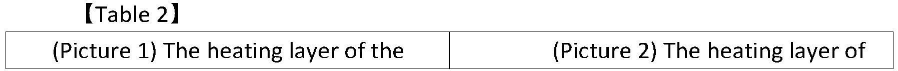

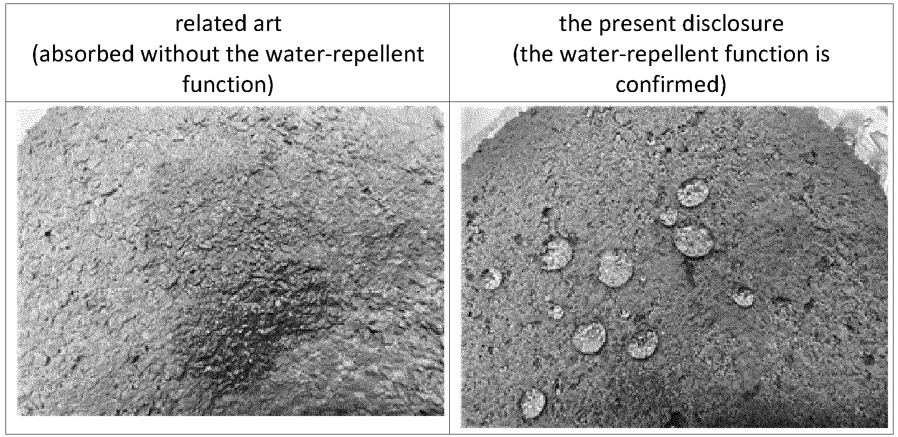

### [Result]

As shown in the picture,
- As the heating layer (picture 1) in the related art is made of a hydrophilic material, when the heating layer is soaked in water, the heating layer immediately absorbed moisture immediately, and the adhesion between layers gradually decreased over time.
- The water repellent function of the present invention was confirmed even when the heating layer (picture 2) of the present disclosure is soaked in water for 2 weeks or more.
- The water-repellent function of the inorganic water-repellent agent of the present disclosure remained at a high temperature of 400 to 500°C.

### (Experimental example 3)

### Test comparing the waterproof and water-repellent function of the ceramic blanket insulation of the related art and the ceramic waterproof and water-repellent blanket insulation of the present disclosure

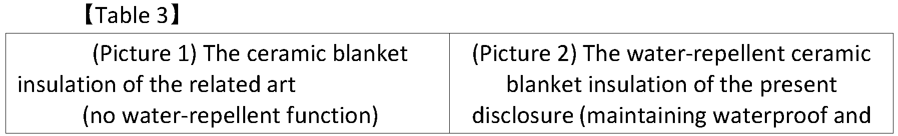

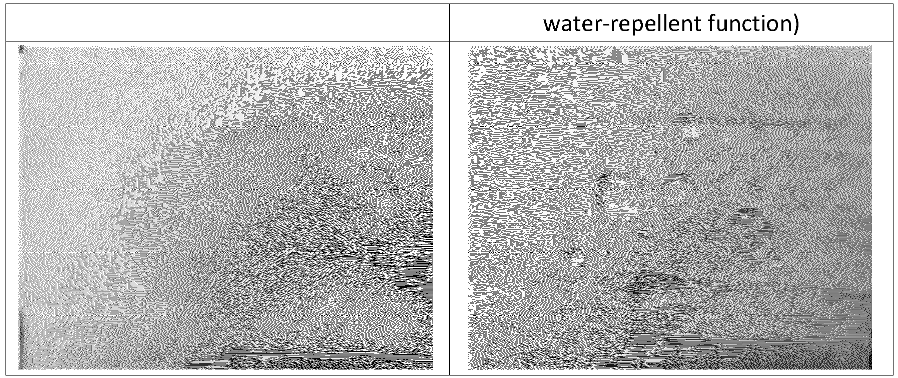

### [Result]

As shown in the picture,
- The conventional ceramic blanket insulation (picture 1) absorbed water to saturation as soon as it was soaked in water, resulting in the loss of insulating properties.
- The water-repellent function of the ceramic waterproof and water-repellent blanket insulation (picture 2) of the present disclosure was confirmed even when it is soaked in water for 2 weeks or more.

### (Experimental example 4)

### Temperature variation due to a mixing ratio of fly ash, Fe₃O₄ powder, mill scale that affect heating temperature (1)

**[Table 4]**

| Test object Microwave oven | Test number | Parts by weight of fly ash | Parts by weight of Fe₃O₄ | Parts by weight mill scale | Heating temperature when heating for 3 minutes (°C) |
|---|---|---|---|---|---|
| Hitachi, Ltd. (Japan) 600W | (1) | 10 | 20 | 700 | 400 |
| | (2) | 10 | 80 | 600 | 430 |
| | (3) | 10 | 160 | 500 | 460 |
| | (4) | 10 | 220 | 400 | 390 |

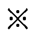 Heating tolerance ±5%, and measuring heating highest temperature

### [Test object]

- Circular metal pan: diameter 190mm, height 20mm, and thickness 0.6mm
- The heating layer used in the test: circular shape, diameter 150mm, thickness 4mm

### [Test composition]

- Basic composition: based on 100 parts by weight of water, 40 parts by weight of sodium silicate, 1.5 parts by weight of acetic acid (99% concentration), and 5 parts by weight of inorganic water-repellent agent
- Temperature variation as fly ash, Fe₃O₄ powder, and mill scale are added to the basic binder composition in the contents shown in the above table.

### (Result)

- As shown in the heating temperature (heating for 3 minutes) of the table, the mixture of the mixing ratio of the experimental number (3) had the highest heating power.

### (Experimental example 5)

### Change in temperature caused by a combination of fly ash, Fe₃O₄ powder, and mill scale that affect heating temperature (2)

**[Table 5]**

| Test object Microwave oven | Test number | Parts by weight of fly ash | Parts by weight of Fe₃O₄ | Parts by weight mill scale | Heating temperature when heating for 3 minutes (°C) |
|---|---|---|---|---|---|
| Hitachi, Ltd. (Japan) 600W | (1) | 20 | 40 | 450 | 330 |
| | (2) | 30 | 30 | 450 | 350 |
| | (3) | 40 | 40 | 350 | 370 |

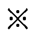 Heating tolerance ±5%, and measuring heating highest temperature

### [Test object]

- Circular metal pan: diameter 190mm, height 20mm, and thickness 0.6mm
- The heating layer used in the test: circular shape, diameter 150mm, thickness 4mm

### [Test composition]

- Basic composition: based on 100 parts by weight of water, 40 parts by weight of sodium silicate, 1.5 parts by weight of acetic acid (99% concentration), and 5 parts by weight of inorganic water-repellent agent
- Temperature variation as fly ash, Fe₃O₄ powder, and mill scale are added to the basic composition in the contents shown in the table.

### [Result]

As shown in the table, different heating temperatures were obtained depending on the change in the composition.

### (Experimental example 6)

### Comparison of heating temperatures depending on the rated high-frequency output of a microwave oven.

**[Table 6]**

| | Microwave oven Manufacturer | 30sec | 1min | 1min 30sec | 2min | 2 min 30sec | 3 min |
|---|---|---|---|---|---|---|---|
| Rated high frequency output 600W | Hitachi, Ltd. (Japan) | 154°C | 244°C | 313°C | 342°C | 380°C | 400°C |
| Rated high freq uency output 1800W | Panasonic (Jap an) | 215°C | 373°C | 448°C | 496°C | 514°C | 514°C |

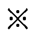 Heating tolerance ±5%, and measuring heating highest temperature

### [Test object]

- Circular metal pan: diameter 190mm, height 20mm, and thickness 0.6mm
- The heating layer (circular): circular shape, diameter 150mm, and thickness 4mm

### [Test composition]

- Based on 100 parts by weight of water, 40 parts by weight of sodium silicate, 1.5 parts by weight of acetic acid (99% concentration), 5 parts by weight of inorganic water-repellent agent, 10 parts by weight of fly ash, 20 parts by weight of Fe₃O₄ powder, and 700 parts by weight of mill scale.

### [Result]

As shown in the table, difference in heating temperatures was confirmed depending on the type of microwave oven and rated frequency output.

### [Industrial applicability]

As described above, the present disclosure is a highly efficient ceramic heating cooker, wherein a ceramic heating element using microwaves uses energy converted from secondary electric energy to green, highly efficient tertiary energy, reducing carbon dioxide that comes from a fossil fuel that causes global warming, and reducing emissions of greenhouse gases, and the present disclosure can be used as a microwave food cooker, a microwave dryer, a food disposer, or a water heater.

## Claims

1. A method for manufacturing a microwave cooker with waterproof function and a high-performance ceramic heating element, the microwave cooker using heat converted from microwaves to heat energy when microwaves are transmitted into a ceramic heating layer, the method comprising:
coupling a pressure regulating valve (5) to a hole part of a main body container (4) with a valve groove part (41), and inserting a waterproof sheet (6) and a ceramic waterproof and water-repellent blanket insulation thereinto, and assembling a heating pan (2) to a silicone packing groove (43) of the main body container (4), the heating pan (2) comprising a heating layer (21) that is attached thereto by being dried and cured, the heating layer (21) being mixed with a base binder or surface-treated with a water-repellent reinforcing coating agent.

2. The method of claim 1, wherein the valve groove part (41) is provided at the main body container (4), and comprises:
a hole part (44) to which the pressure regulating valve 5 is coupled;
a plurality of exhaust ribs (46) formed at a portion inside the main body container (4);
an exhaust port (47) defined as a space between the a plurality of exhaust ribs (46);
a holder (48) formed at a portion of the plurality of exhaust ribs (46) or spaced apart on one space thereof; and
a cap guard (49) formed outside the main body container (4) and provided for coupling of the pressure regulating valve (5).

3. The method of claim 1, wherein the valve groove part (41) is formed at the main body container (4), and comprises a hole part (44) coupled to the pressure regulating valve (5), a plurality of exhaust ribs (46) formed at a portion inside the main body container (4), and an exhaust port (47) defined as a space between the plurality of exhaust ribs (46), and
a closed space (7) is formed between the heating pan (2) and the main body container (4) by coupling the heating pan (2) and the main body container (4) to each other, and
the waterproof sheet (6) is located between the main body container (4) and a lower portion of a lower portion of the ceramic waterproof and water-repellent blanket insulation (3), and is configured to cover the valve groove part (41) but expose the exhaust port (47) so that air flows between the valve groove part (41) and the closed space (7), and is made of a highly heat-resistant insulating material through which microwaves are transmitted.

4. The method of claim 1, wherein the valve groove part (41) is formed at the main body container (4), and comprises a hole part (44) coupled to the pressure regulating valve (5), a plurality of exhaust ribs (46) formed at a portion inside the main body container (4), and an exhaust port (47) defined as a space between the plurality of exhaust ribs (46), and
the pressure regulating valve (5) is made of a silicone rubber material having elasticity, coupled to the hole part (44), and comprises: a support (51) formed at an upper end thereof; a cap part (52) formed at a lower end thereof; and a support post part (53) connecting the support (51) and the cap part (52) to each other,
wherein the cap part (52) comprises a depressed groove (56) on an upper surface thereof and comprises a rim part (54) formed along an edge thereof,
each of the support (51) and the support post part (53) comprises one or more exhaust passages (57) formed by cutting portions thereof, and
a thermal inflation pressure is transmitted to the depressed groove (56) through the exhaust passage (57) and the rim part (54) is bent to create an opening (55), so that the thermal inflation pressure is discharged through the opening.

5. The method of claim 1, wherein the pressure regulating valve (5) is a pressure discharge structure, has a valve structure opening and closing by spring elasticity, wherein a member that is opened and closed automatically based on the strength of a pressure is inserted into a valve through hole and raised and lowered, and a coupling member for coupling the pressure regulating valve to the main body container is included to discharge the pressure automatically.

6. The method of claim 1, wherein a base binder composition is prepared by including and stirring 30 to 50 parts by weight of sodium silicate, 1.5 to 2 parts by weight of concentrated 99% acetic acid, 10 to 70 parts by weight of fly ash, 20 to 220 parts by weight of Fe₃O₄ powder, and 5 to 10 parts by weight of inorganic water-repellent agent, based on 50 parts by weight of water.

7. The method of claim 6, wherein the Fe₃O₄ powder comprises a nano state of 200 mesh or less and a purity of 98% or higher.

8. The method of claim 6, wherein the inorganic water-repellent agent is a lysate including 5 to 10 parts by weight of colloidal nano silica hydrophobic silicon dioxide powder or nano aerogel powder, based on 100 parts by weight of a mixed solution of 10 to 90 % by weight of N-octyltriethoxy silane and 10 to 90 % by weight of tetraethoxy silane, and is highly heat-resistant inorganic water-repellent agent.

9. The method of claim 1, wherein the heating layer is a mixture with a composition ratio including, based on 100 parts by weight of a base binder, 350 to 700 parts by weight of mill scale, the mill scale being a metallic oxide with a scale particle size of 3 mm or less and including 80 to 95% of Fe₂O₃ and FeO content.

10. The method of claim 6, wherein the water-repellent reinforcing coating agent is prepared by including and stirring, based on 100 parts by weight of a mixed solution of 10 to 90 % by weight of N-octyl triethoxy silane and 10 to 90 % by weight of tetraethoxy silane, 5 to 7 parts by weight of colloidal nano silica hydrophobic silicon dioxide powder or nano aerogel powder and 3 to 10 parts by weight of nano carbon powder.

11. The method of claim 1, wherein the surface treatment of the heating layer water-repellent reinforcing coating agent is performed by spraying the water-repellent reinforcing coating agent on a surface of the heating layer and then drying and curing the surface in a tunnel-type drying furnace at 250 to 350°C for 25 to 30 minutes.

12. The method of claim 1, wherein the heating pan is metallic, and a surface shape of a heating layer composition is molded into a flat, convex, or concave shape and attached to a lower portion of the pan, and then dried and cured at 250 to 350°C for 25 to 30 minutes.

13. The method of claim 1, wherein the ceramic waterproof and water-repellent blanket insulation (3) is formed by a porous fiber blanket layer comprising two or more components selected from Al₂O₃, SiO₂, CaO, MgO, ZrO₂, a silicate group, and an alkoxysilane group, and is a ceramic blanket insulation or an aerogel blanket insulation surface-treated with a hydrophobic silica material on a fiber layer or including a hydrophobic silica material in a fiber layer component.

14. The method of claim 1, wherein an assembling process of the heating pan (2), in which a silicone packing (22) is coupled to a silicone packing groove (43) of the main body container (4), is performed by heating the main body container (4) at 100 to 150°C of ambient temperature for 5 to 10 to increase a volume of the packing groove (43) by thermal inflation, and then inserting and coupling the heating pan (2) to the main body container (4) to reduce the temperature of the main body container (4) to a room temperature and recover the volume of the packing groove (43) to compress a perimeter of the elastic silicone packing, thereby allowing the heating pan (2) and the main body container (4) to be brought into close contact with each other without a gap.

15. The method of claim 1, wherein when the main body container (4) and the heating pan (2) are assembled with one of or both a container protruding end (45) of the main body container (4) and a pan protruding end (23) of the heating pan (2) formed, a perimeter of the ceramic waterproof and water-repellent blanket insulation (3) is compressed.
